# EUROPÄISCHE PATENTSCHRIFT

(11) **EP 0 759 406 B1**
(45) Veröffentlichungstag und Bekanntmachung des Hinweises auf die Patenterteilung: **04.11.1998**
(21) Anmeldenummer: 95115840.1
(22) Anmeldetag: 07.10.1995
(51) Int. Cl.: B65G 47/29, B23Q 7/14

(54) **Vorrichtung zum Vereinzeln von Materialträgern, insbesondere für den labormedizinischen Einsatz**
Separating device for material carriers, especially for use in medical laboratories
Dispositif pour séparer des porte-matières, en particulier à utiliser dans les laboratoires médicaux

(30) Priorität: 16.08.1995 EP 95112810
(43) Veröffentlichungstag der Anmeldung: 26.02.1997
(73) Patentinhaber: von Froreich, André, Dr., 21149 Hamburg (DE)
(72) Erfinder: von Froreich, André, Dr., 21149 Hamburg (DE)
(74) Vertreter: von Raffay, Vincenz, Dipl.-Ing.

(56) Entgegenhaltungen:
- EP-A- 0 583 740
- DE-A- 3 714 108
- US-A- 4 928 806
- US-A- 4 947 980

## Beschreibung

Die Erfindung betrifft eine Vorrichtung zum Vereinzeln von Materialträgern, insbesondere für den labormedizinischen Einsatz, die auf einem Förderer kontinuierlich gefördert werden, wobei der Förderer durch mindestens zwei beabstandete, im Förderbereich parallele und gleichsinnig in einer waagerechten Ebene geführte Förderriemen gebildet ist.

Aus der DE-A-37 14 108 ist ein anders aufgebauter Förderer bekannt, der ein Schrittförderer ist und zwei beabstandete Tragbalken aufweist. Zwischen diesen Tragbalken kann ein Sperrschieber oder Anschlag in den Bewegungsbereich der Werkstückträger bewegt werden, um diese zu vereinzeln. Auf der Unterseite der Werkstückträger ist eine Nut vorgesehen, die den Vereinzelungsanschlag aufnimmt, so daß dieser in die Sperrstellung bewegt werden kann, wenn ein freigegebener Werkstückträger sich noch im Bereich dieses Anschlages befindet.

Die Erfindung ist auf einen Materialträger der eingangs genannten Art gerichtet, die insbesondere in medzinischen Labors eingesetzt werden. Bei diesen Förderern ist es wichtig, daß keine Fehler auftreten, die zur Vertauschung der einzelnen Materialträger innerhalb des Systems führen. Die vereinzelten Materialträger können beispielsweise in die Identifikation und Vereinzelung mit Hilfe einer Weiche auf einem Parallelförderer verschoben oder in einer Analysestation "bearbeitet", beispielsweise positioniert und abpipettiert werden.

Der Erfindung liegt die Aufgabe zugrunde, einen solchen Förderer der eingangs genannten Art zu schaffen, bei dem die Vereinzelung in einfacher Weise und mit großer Sicherheit auch bei aufeinanderfolgenden Materialträgern gewährleistet ist.

Diese Aufgabe wird grundsätzlich durch den Anspruch 1 gelöst.

Dadurch, daß die Aussparung breiter und in Förderrichtung länger ist als die entsprechende Abmessung des Sperrschiebers in dieser Richtung, ist sichergestellt, daß der Sperrschieber ohne Behinderung nach oben bewegt werden kann und so den ausgewählten Materialträger sperrt. Die unterhalb der Förderbahn angeordneten Sensoren erkennen die Position der einzelnen Materialträger und steuern die Bewegung des Sperrschiebers. Dadurch, daß mindestens zwei beabstandete und parallele Förderriemen vorgesehen sind, kann der Sperrschieber zwischen diesen Förderriemen von unten auf- und abbewegt werden. Der Abstand zwischen Unterseite des Materialträgers und Oberseite des Sperrschiebers ist gering, so daß auf jeden Fall sichergestellt ist, daß der Sperrschieber zum richtigen Zeitpunkt seine Sperrstellung erreicht und den ausgewählten Materialträger mit entsprechender Sicherheit sperrt. Durch die Dicke der Förderriemen wird der Abstand zwischen Materialträger und den Sensoren, d.h. der Arbeitsabstand, festgelegt und konstantgehalten. Ein genau definierter Abstand zwischen den Materialträgern und den Sensoren bzw. Initiatoren mit Toleranzen im Bereich von Zehntelmillimetern ist für eine zuverlässige Funktion wichtig.

In den Unteransprüchen sind vorteilhafte Ausgestaltungen unter Schutz gestellt.

Im folgenden wird die Erfindung unter Hinweis auf die Zeichnung anhand eines Ausführungsbeispieles näher erläutert.

Es zeigt:
- Fig. 1: eine perspektivische Ansicht einer Vorrichtung nach der Erfindung als Ausschnitt aus einem Fördersystem;
- Fig. 2: eine schematische Draufsicht auf eine Darstellung der Fig. 1 mit Materialträgern einer ersten Ausführungsform in verschiedenen Positionen; und
- Fig. 3: eine schematische Darstellung, die derjenigen der Fig. 2 entspricht, jedoch mit Materialträgern einer anderen Ausführungsform.

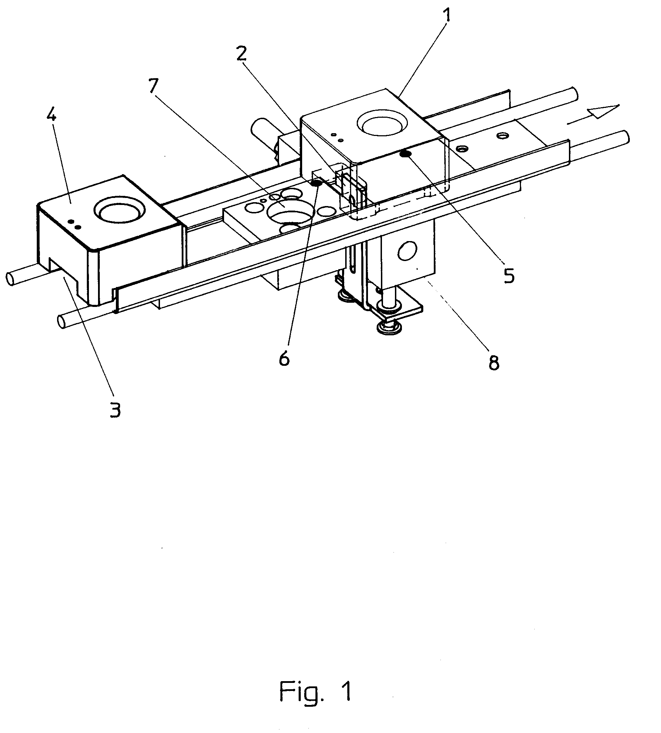

Die in Fig. 1 dargestellte Vorrichtung weist einen Ausschnitt aus einem Förderer auf, der durch zwei parallele und beabstandete, kreisrunde Förderriemen 10 gebildet wird. Die Förderrichtung der beiden Riemen ist gleichsinnig, wie durch den Pfeil angedeutet. Eine U-förmige Schiene 11 führt die Materialträger 1 und 4, die auf den Förderriemen aufliegen und durch Reibung mitgenommen werden.

Unterhalb der durch den Förderer gebildeten Förderbahn befindet sich eine Sperreinrichtung mit einem Sperrschieber 2 und einer Betätigung 8.

Jeder Materialträger 1,4 weist an seinem in Förderrichtung hinten liegenden Ende an der Unterseite eine Aussparung 3 auf. Diese Aussparung 3 ist mindestens so breit wie der entsprechende, wirksam werdende Abschnitt des Sperrschiebers 2, so daß dieser sich ungehindert in die Aussparung hineinbewegen kann. Sensoren 5 und 6 dienen der Bestimmung der Position der Materialträger und der Steuerung des Sperrschiebers. Ein Initiator oder Lesekopf 7 ist vorgesehen, um einen bestimmten Materialträger zu erkennen.

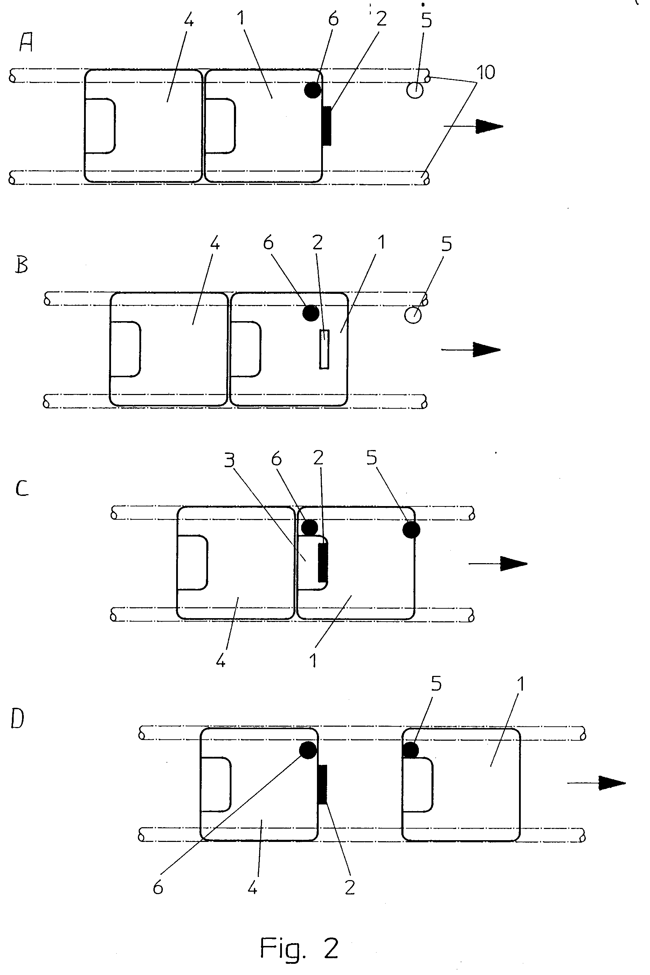

In Fig. 2 ist ein Materialträger einer ersten Ausführungsform dargestellt, bei dem die Aussparung 3 auf der Rückseite des Materialträgers, d.h. in Förderrichtung hinten liegt und nach hinten offen ist.

Bei dieser Ausführungsform nach Fig. 2 läuft die Vereinzelung grundsätzlich so ab, daß zwei direkt hintereinanderlaufende Materialträger 1 und 4 dadurch vereinzelt werden, daß der Sperrschieber 2 sich in die Aussparung 3 des vorauseilenden Materialträgers 1 schiebt und der nachfolgende Materialträger 4 dann auf den Sperrschieber aufläuft. Der Zeitpunkt, ab wann der Sperrschieber in die Aussparung stößt, wird durch eine Meldung des Sensors 5 festgelegt. Daß ein Materialträger auf den Sperrschieber 2 aufgelaufen ist, wird durch den Sensor 6 gemeldet. Ein Initiator oder Lesekopf 7 (Fig. 1) dient der Erkennung des Materialträgers.

Wenn mit Hinweis auf Fig. 2 eine Vereinzelung durchgeführt werden soll, bei dem jeder Materialträger gestoppt wird, läuft dieses wie folgt ab:

In Position A stehen zwei Materialträger 1 und 4 direkt aufeinanderfolgend vor dem Sperrschieber 2 der Vereinzelungsstation.

In Position B hat sich der Sperrschieber 2 gesenkt. Der Materialträger 1 passiert gerade den Sperrschieber.

In Position C meldet der Sensor 5, daß der erste Materialträger 1 soweit ist, daß der Sperrschieber 2 in die Aussparung 3 des ersten Materialträgers 1 stoßen kann.

In Position D ist der nachfolgende Materialträger 4 auf den nach oben bewegten Sperrschieber aufgelaufen. Der Sensor 6 meldet die Anwesenheit eines Materialträgers in der Sperrstellung.

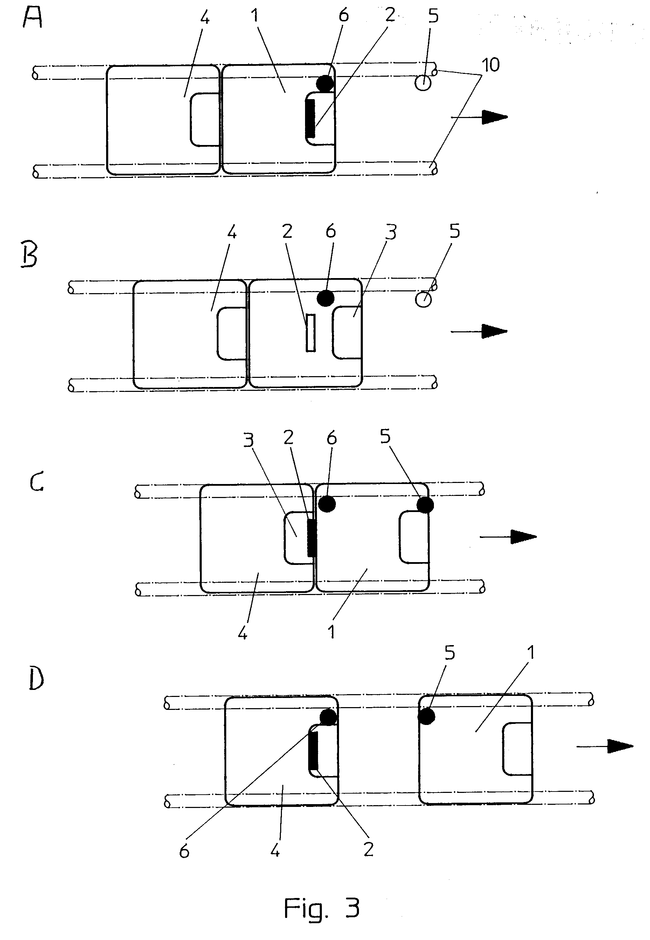

Bei der Ausführungsform nach Fig. 3 befindet sich die Aussparung 2 auf der Vorderseite jedes Materialträgers und ist nach vorne offen. Im Unterschied zu der Ausführungsform nach Fig. 2 bewegt sich der Sperrschieber 2 nicht in eine Aussparung des vorauseilenden Materialträgers 1, sondern in die vorne liegende Aussparung des unmittelbar zu sperrenden Materialträgers 4.

Mit Hinweis auf die verschiedenen Positionen A bis D in Fig. 3 läuft die Vereinzelung wie folgt ab:

In Position A stehen zwei Materialträger 1 und 4 direkt aufeinanderfolgend vor einem Sperrschieber 2, der sich in Sperrstellung der Vereinzelungsstation befindet, und zwar in der Aussparung des gesperrten Materialträgers 1.

In Position B hat sich der Sperrschieber 2 gesenkt. Der Materialträger 1 passiert gerade den Sperrschieber.

In Position C meldet der Sensor 5, daß der erste Materialträger 1 soweit ist, daß der Sperrschieber 2 in die Aussparung 3 des Materialträgers 4 stoßen kann.

In Position D ist der nächste Materialträger 4 auf den nach oben bewegten Sperrschieber 2 aufgelaufen. Der Sensor 6 meldet die Anwesenheit des Materialträgers in der Sperrstellung.

## Patentansprüche

1. Vorrichtung zum Vereinzeln von Materialträgern, insbesondere für den labormedizinischen Einsatz, die auf einem Förderer kontinuierlich gefördert werden, mit folgenden Merkmalen
a) der Förderer ist durch mindestens zwei beabstandete, im Förderbereich parallele und gleichsinnig in einer waagerechten Ebene geführte Förderriemen (10) gebildet;
b) unterhalb des Förderers (10) ist ein Sperrschieber (2) angeordnet ist, der in den Bewegungsbereich der Materialträger (1,4) auf- und abbewegbar;
c) an der Unterseite jedes Materialträgers ist in Bewegungsrichtung eine Aussparung (3) zur Aufnahme des in Sperrstellung bewegten Sperrschiebers ausgebildet, die breiter und in Förderrichtung länger ist als der Sperrschieber;
d) unterhalb und zwischen den Förderriemen (10) sind Sensoren (5,6) zur Bestimmung der Position der Materialträger und Initiatoren vorgesehen;
e) die Dicke der Förderriemen (10) gewährleistet den Arbeitsabstand zwischen den Materialträgern und den Initiatoren bzw. Sensoren (5 bis 7).

2. Vorrichtung nach Anspruch 1, dadurch gekennzeichnet, daß die Aussparung (3) in Bewegungsrichtung an der Rückseite jedes Materialträgers (1,4) und dort nach hinten offen ausgebildet ist.

3. Vorrichtung nach Anspruch 1, dadurch gekennzeichnet, daß die Aussparung (3) in Bewegungsrichtung an der Vorderseite des Materialträgers (1,4) und nach vorne offen ausgebildet ist.

4. Vorrichtung nach Anspruch 1, 2 oder 3, dadurch gekennzeichnet, daß zusätzlich zu den Sensoren (5,6) ein Lesekopf (7) zur Identifizierung der Materialträger (1,4) vorgesehen ist.

5. Vorrichtung nach einem oder mehreren der vorstehenden Ansprüche, dadurch gekennzeichnet, daß die Förderriemen einen runden Querschnitt aufweisen.

6. Vorrichtung nach einem der Ansprüche 1 bis 4, dadurch gekennzeichnet, daß die Förderriemen einen rechtekkigen Querschnitt aufweisen.

## Claims

1. Apparatus for separating material carriers, particularly for laboratory use, which are continuously conveyed on a conveyor and having the following features:
a) the conveyor is formed by at least two spaced conveyor belts (10), which are parallel and equidirectional in the conveying area and guided in a horizontal plane,
b) below the conveyor (10) is located a blocking slide (2), which moves up and down in the movement range of the material carriers (1, 4),
c) on the underside of each material carrier, in the direction of movement, is formed a recess (3) for receiving the blocking slide moved into the blocking position and which is wider and, in the conveying direction, longer than the blocking slide,
d) below and between the conveyor belt (10) are provided sensors (5, 6) for determining the position of the material carriers and initiators,
e) the thickness of the conveyor belts (10) ensures the working spacing between the material carriers and the initiators or sensors (5 to 7).

2. Apparatus according to claim 1, characterized in that, in the movement direction, the recess (3) is formed on the back of each material carrier (1, 4) and is open to the rear there.

3. Apparatus according to claim 1, characterized in that, in the movement direction, the recess (3) is formed on the front of the material carrier (1, 4) and is open to the front.

4. Apparatus according to claims 1, 2 or 3, characterized in that, in addition to the sensors (5, 6), a reading head (7) is provided for identifying the material carriers (1, 4).

5. Apparatus according to one or more of the preceding claims, characterized in that the conveyor belts have a circular cross-section.

6. Apparatus according to one of the claims 1 to 4, characterized in that the conveyor belts have a rectangular cross-section.

## Revendications

1. Dispositif pour la séparation de porte-matières transportés en continu sur un convoyeur, en particulier pour un emploi dans des laboratoires médicaux, avec les caractéristiques suivantes :
a) le convoyeur est constitué par au moins deux courroies de convoyeur (10) placées à distance l'une de l'autre, parallèles dans la zone de convoyage et guidées dans le même sens dans un plan horizontal ;
b) sous le convoyeur (10), il est prévu un taquet d'arrêt (2) qui peut monter et descendre dans la zone de déplacement des porte-matières (1, 4) ;
c) sur la face inférieure de chaque porte-matières, il est ménagé un évidement (3) dans le sens de déplacement pour la réception du taquet d'arrêt qui est amené en position de blocage, ledit évidement étant plus large, et plus long dans le sens de convoyage que le taquet d'arrêt ;
d) sous et entre les courroies de convoyeur (10) , il est prévu des capteurs (5, 6) servant à déterminer la position des porte-matières, ainsi que des déclencheurs ;
e) l'épaisseur des courroies de convoyeur (10) garantit l'écart de travail entre les porte-matières et les déclencheurs et/ou les capteurs (5 à 7) .

2. Dispositif selon la revendication 1, caractérisé en ce que l'évidement (3) est formé dans le sens de déplacement sur la face arrière de chaque porte-matières (1, 4) et est ouvert vers l'arrière.

3. Dispositif selon la revendication 1, caractérisé en ce que l'évidement (3) est ménagé dans le sens de déplacement sur la face avant de chaque porte-matières (1, 4) et est ouvert vers l'avant.

4. Dispositif selon la revendication 1, 2 ou 3, caractérisé en ce qu'en supplément des capteurs (5, 6), il est prévu une tête de lecture (7) pour l'identification des porte-matières (1, 4).

5. Dispositif selon l'une ou plusieurs des revendications précédentes, caractérisé en ce que les courroies de convoyeur présentent une section transversale ronde.

6. Dispositif selon l'une des revendications 1 à 4, caractérisé en ce que les courroies de convoyeur présentent une section transversale rectangulaire.
